# EUROPÄISCHE PATENTSCHRIFT

(11) **EP 1 445 430 B1**
(45) Veröffentlichungstag und Bekanntmachung des Hinweises auf die Patenterteilung: **05.10.2005**
(21) Anmeldenummer: 04000307.1
(22) Anmeldetag: 09.01.2004
(51) Int. Cl.: F01L 1/02, F01L 9/04, H02K 1/27, H02K 29/00, H02K 1/32

(54) **Ventiltrieb für einen Verbrennungsmotor**
Valve gear for an internal combustion engine
Mécanisme de commande de soupapes pour un moteur à combustion interne

(30) Priorität: 04.02.2003 DE 10304309
(43) Veröffentlichungstag der Anmeldung: 11.08.2004
(73) Patentinhaber: Bayerische Motoren Werke Aktiengesellschaft, 80809 München (DE)
(72) Erfinder: Meyer, Johannes, 85757 Karlsfeld (DE); Scholler, Michael, 85521 Riemerling (DE); Bürgel, Robert, Dr., 80689 München (DE)

(56) Entgegenhaltungen:
- WO-A-03/016683
- DE-A- 3 607 256
- DE-A- 10 116 707
- DE-A- 10 129 766
- FR-A- 2 608 675
- US-A- 5 331 931
- US-A- 5 345 669
- US-A- 5 889 342

## Beschreibung

Die vorliegende Erfindung betrifft einen Ventiltrieb für einen Verbrennungsmotor gemäß dem Oberbegriff des Patentanspruches 1.

Ein derartiger Ventiltrieb ist aus der US 5 331 931 bekannt. Ventiltriebe, bei denen Elektromotoren Verwendung finden, sind ferner in der DE 101 16 707 A1, der FR 2 608 675 und der DE 36 07 256 A1 beschrieben.

Bei herkömmlichen Verbrennungsmotoren wird die Nockenwelle mechanisch über eine Steuerkette oder einen Steuerriemen von der Kurbelwelle angetrieben. Zur Steigerung der Motorleistung und zur Senkung des Spritverbrauchs ist es von Vorteil, die Ventile der einzelnen Zylinder, zumindest aber die Einlassventile und die Auslassventile der einzelnen Zylinder individuell anzusteuern. Dies ist durch einen elektromagnetischen Ventiltrieb möglich. Hierzu ist jedem Ventil bzw. jeder "Ventilgruppe" eines Zylinders eine "Aktuatoreinheit" zugeordnet. Derzeit werden unterschiedliche Grundtypen von Aktuatoreinheiten erforscht. Bei einem Grundtyp sind einem Ventil oder einer Ventilgruppe ein Öffnungs- und Schließmagnet zugeordnet. Durch Bestromen der Magneten können die Ventile axial verschoben, d.h. geöffnet bzw. geschlossen werden. Derartige Ventiltriebe sind jedoch regelungstechnisch nur schwer beherrschbar.

Aufgabe der Erfindung ist es, einen Ventiltrieb zu schaffen, der eine kompakte Bauweise aufweist und dessen Steuerung regelungstechnisch gut beherrschbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Ventiltrieb mit mindestens einem Ventil aus, das in herkömmlicher Weise durch Nockenwelle angesteuert wird wobei die Nockenwelle elektromotorisch angetrieben wird. Der Kern der Erfindung besteht nun darin, dass die Nockenwelle einen Rotor eines Elektromotors bildet, derart, dass die Nockenwelle integraler Bestandteil des Elektromotors des Ventiltriebs ist,wobei auf der Nockenwelle Permanentmagnete angeordnet sind.

Durch die funktionale Integration der Nockenwelle in den Aritriebsmotor des Ventiltriebs ergibt sich eine sehr kompakte Bauweise. Da das Dreh- bzw. Laufverhalten eines Elektromotors sehr exakt steuerbar ist, ist der Ventiltrieb gemäß der Erfindung regelungstechnisch gut beherrschbar.

Nach einer Weiterbildung der Erfindung ist die Nockenwelle aus einem magnetischen Material, insbesondere aus einem ferromagnetischen Material hergestellt. Vorzugsweise sind die Permanentmagnete z.B. durch Kleben oder Bandagieren befestigt.

Der Elektromotor weist ferner einen Stator auf, der sich im Bereich der Permanentmagneten um die Nockenwelle herum erstreckt.

Vorzugsweise ist die Nockenwelle hohl und weist somit ein vergleichsweise geringes Gewicht auf. Insbesondere bei höheren mechanischen Leistungen entsteht an der Nockenwelle eine hohe Wärmeleistung, die abgeführt werden muss. Zur Erreichung einer hohen Leistungsdichte kann vorgesehen sein, dass die hohle Nockenwelle von einem Kühlmedium, z.B. Öl oder Wasser, durchströmt ist.

Vorzugsweise ist jedem Zylinder des Verbrennungsmotors oder jedem Ventil ein separater Ventiltrieb zugeordnet, wie er oben beschrieben ist. Alternativ dazu kann auch vorgesehen sein, das jeweils den Einlassventilen und den Auslassventilen eines jeden Zylinders jeweils ein derartiger Ventiltrieb zugeordnet ist.

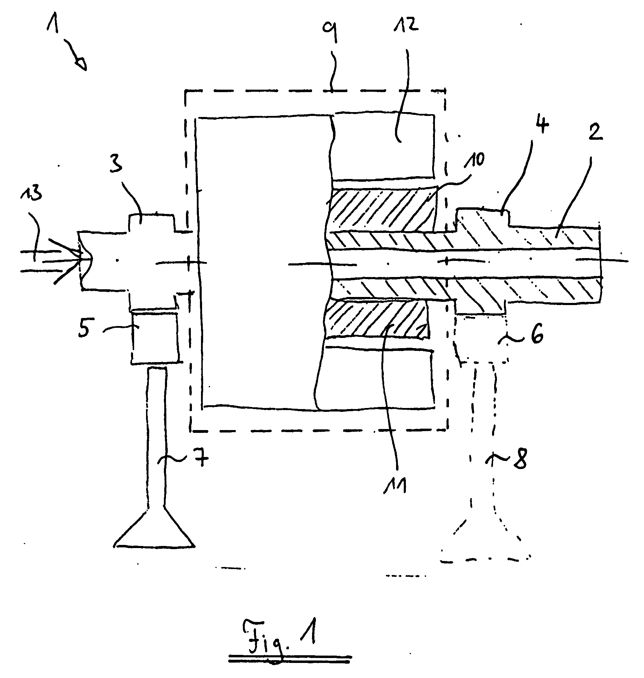

Im folgenden wird die Erfindung im Zusammenhang mit der Zeichnung näher erläutert. Die einzige Figur 1 zeigt in schematischer Darstellung das Grundprinzip der Erfindung.

Figur 1 zeigt einen Ventiltrieb 1 für einen Verbrennungsmotor. Der Ventiltrieb weist ein hohles Nockenwellenstück 2 auf, an dem ein erster Nocken 3 und ein zweiter Nocken 4 vorgesehen ist. Die Nocken 3, 4 betätigen über Rollenschlepphebel 5, 6 jeweils ein Ventil 7, 8. Die Ventile 7, 8 können Einlassventile oder Auslassventile sein.

Im Unterschied zu herkömmlichen Verbrennungsmotoren wird das Nockenwellenstück 2 nicht mechanisch über Steuerkette oder einen Steuerriemen angetrieben, sondern elektromotorisch. Wesentlich ist, dass das Nockenwellenstück 2 einen Rotor eines Elektromotors 9 bildet. Das Nockenwellenstück 2 ist somit integraler Bestandteil des Elektromotors 9. Auf dem Nockenwellenstück 2 sind Permanentmagnete 10, 11 angeordnet, die mit einem das Nockenwellenstück 2 umgebenden Stator 12 zusammenwirken. Die Permanentmagnete 10, 11 sind mit dem Nockenwellenstück 2 gefügt, z.B. durch Kleben oder Bandagieren.

Da das Nockenwellenstück 2 hohl ist, hat es im Vergleich zu einer Vollwelle ein geringeres Gewicht. Ferner kann, wie durch einen Pfeil 13 angedeutet ist, Kühlmedium durch das Nockenwellenstück 2 hindurch gepumpt werden, um die während des Betriebs anfallende Wärmeleistung von dem Nockenwellenstück 2 abzuführen.

## Patentansprüche

1. Ventiltrieb (1) für einen Verbrennungsmotor mit
einer Nockenwelle (2) mit mindestens einem Nocken (3, 4) zur Betätigung mindestens eines Ventils (7, 8) des Verbrennungsmotors, wobei die Nockenwelle (2) elektromotorisch angetrieben ist, so dass der Ventiltrieb ein elektromotorisch angetriebener Ventiltrieb ist,
**dadurch gekennzeichnet, dass**
die Nockenwelle (2) einen Rotor eines Elektromotors (9) bildet, derart, dass die Nockenwelle (2) integraler Bestandteil des Elektromotors (9) ist, wobei auf der Nockenwelle (2) Permanentmagnete (10, 11) angeordnet sind.

2. Ventiltrieb (1) nach Anspruche 1, wobei die Nockenwelle (2) aus einem magnetischen Material hergestellt.

3. Ventiltrieb (1) nach einem der Ansprüche 1 oder 2, wobei die Permanentmagneten (10, 11) durch Kleben auf der Nockenwelle (2) befestigt sind.

4. Ventiltrieb (1) nach einem der Ansprüche 1 oder 2, wobei die Permanentmagneten (10, 11) durch Bandagieren auf der Nockenwelle (2) befestigt sind.

5. Ventiltrieb (1) nach einem der Ansprüche 1 bis 4, wobei ein Stator (12) vorgesehen ist, der sich im Bereich der Permanentmagneten (10, 11) um die Nockenwelle (2) herum erstreckt.

6. Ventiltrieb (1) nach einem der Ansprüche 1 bis 5, wobei die Nockenwelle (2) hohl ist und von einem Kühlmedium durchströmt ist.

7. Ventiltrieb (1) nach Anspruch 6, wobei das Kühlmedium Öl ist.

8. Ventiltrieb (1) nach Anspruch 6, wobei das Kühlmedium Wasser ist.

## Claims

1. A valve drive (1) for an internal combustion engine comprising a camshaft (2) and at least one cam (3, 4) for operating at least one valve (7, 8) of the engine, wherein the camshaft (2) is driven by an electric motor, so that the valve drive is an electrically driven valve drive,
**characterised in that** the camshaft (2) is a rotor of an electric motor (9), such that the camshaft (2) is an integral component of the motor (9), wherein permanent magnets (10, 11) are disposed on the camshaft (2).

2. A valve drive (1) according to claim 1, wherein the camshaft (2) is formed of a magnetic material.

3. A valve drive (1) according to claim 1 or 2, wherein the permanent magnets (10, 11) are fastened to the camshaft (2) by bonding.

4. A valve drive (1) according to claim 1 or 2, wherein the permanent magnets (10, 11) are fastened to the camshaft (2) by binding.

5. A valve drive (1) according to any of claims 1 to 4, wherein a stator (12) is provided and extends round the camshaft (2) in the region of the permanent magnets (10, 11).

6. A valve drive (1) according to any of claims 1 to 5, wherein the camshaft (2) is hollow and flowed through by a cooling medium.

7. A valve drive (1) according to claim 6, wherein the cooling medium is oil.

8. A valve drive (1) according to claim 6, wherein the cooling medium is water.

## Revendications

1. Commande de soupape (1) pour un moteur à combustion interne comprenant un arbre à cames (2) qui porte au moins une came (3, 4) pour l'actionnement d'au moins une soupape (7, 8) du moteur à combustion interne, l'arbre à cames (2) étant entraîné par un moteur électrique, il résulte que la commande de soupape est entraînée par moteur électrique,
**caractérisée en ce que**
l'arbre à cames (2) forme un rotor d'un moteur électrique (9) de telle sorte que l'arbre à cames (2) fait partie intégrante du moteur électrique (9), des aimants permanents (10, 11) étant agencés sur l'arbre à cames (2).

2. Commande de soupape (1) selon la revendication 1,
dans laquelle
l'arbre à cames (2) est fabriqué en une matière magnétique.

3. Commande de soupape (1) selon une des revendications 1 ou 2,
dans laquelle
les aimants permanents (10, 11) sont fixés sur l'arbre à cames (2) par collage.

4. Commande de soupape (1) selon une des revendications 1 ou 2,
dans laquelle
les aimants permanents (10, 11) sont fixés sur l'arbre à cames (2) par frettage.

5. Commande de soupape (1) selon une des revendications 1 à 4,
dans laquelle
il est prévu un stator (12) qui s'étend autour de l'arbre à cames (2) dans la région des aimants permanents (10, 11).

6. Commande de soupape (1) selon une des revendications 1 à 5,
dans laquelle
l'arbre à cames (2) est creux et parcouru par un agent de refroidissement.

7. Commande de soupape (1) selon la revendication 6,
dans laquelle
l'agent de refroidissement est de l'huile.

8. Commande de soupape (1) selon la revendication 6,
dans laquelle
l'agent de refroidissement est de l'eau.
